# EUROPEAN PATENT APPLICATION

(11) **EP 2 458 198 A2**
(43) Date of publication of application: **30.05.2012**
(21) Application number: 11190196.3
(22) Date of filing: 22.11.2011
(51) Int. Cl.: F03D 1/00, F03D 11/00

(54) **System and method for locating a maintenance device on a wind turbine**

(30) Priority: 29.11.2010 US 955384
(71) Applicant: General Electric Company, Schenectady, NY 12345 (US)
(72) Inventor: Olson, Steven Haines, Greenville, SC South Carolina 29615 (US); Mishra, Debasish, 560066 Karnataka (IN); Fritz, Peter James, Greenville, SC South Carolina 29615 (US); Johnson, Stephen Bertram, Greenville, SC South Carolina 29615 (US)
(74) Representative: Bedford, Grant Richard

(57) **Abstract**

A system (100) and method are disclosed for locating a maintenance device (102) approximate an area of interest (104) of a wind turbine (10). The system (100) generally includes a carriage (106) configured to support the maintenance device (102) and a cable (108) having first and second ends (114, 116) attached to the carriage (106). Additionally, the system (100) includes first and second anchor points (110, 112), with the first anchor point (110) being disposed adjacent to a component of the wind turbine (10). The second anchor point (112) is spaced apart from the first anchor point (110) such that the area of interest (104) is generally disposed between the first and second anchor points (110, 112). The cable (108) may be coupled along its length between the first and second anchor points (110, 112) such that, as the cable (108) is displaced, the carriage (106) is moved to a position at which the area of interest (104) is accessible to the maintenance device (102).

## Description

The present subject matter relates generally to wind turbines and, more particularly, to a system and method for locating a maintenance device approximate an area of interest on a wind turbine so that a maintenance operation may be performed on the area of interest.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

The maintenance of wind turbine components is critical to the ongoing operation of a wind turbine. One area of interest of a wind turbine on which maintenance operations are routinely performed are the rotor blades. For example, maintenance operations, such as inspections, cleaning, repair and the like, are performed to ensure that the rotor blades are maintained in optimal condition. For example, the outer shell of a rotor blade may often be visually inspected for cracks, erosion, fouling and other potential defects.

However, to perform maintenance operations on a wind turbine, it is often required that a service worker or a robotic device be located approximate the area (e.g., the rotor blade) at which the maintenance operation is to be performed. For example, it is known to use a robotic crawler to traverse the wind turbine components so that maintenance operations can be performed. However, the expense of such robotic crawlers generally prohibits their widespread use. Alternatively, it is known to send service workers up in baskets to perform maintenance operations on rotor blades and other wind turbine components. However, the equipment needed to send the workers up is also expensive and execution of the task can be very time consuming.

Accordingly, there is a need for an effective and low cost system for locating a maintenance device approximate an area of interest of a wind turbine so that a maintenance operation can be performed on the area of interest.

Various aspects and advantages of the invention will be set forth in part in the following description, or may be clear from the description, or may be learned through practice of the invention.

In one aspect, the present subject matter discloses a system for locating a maintenance device approximate an area of interest of a wind turbine. The system generally includes a carriage configured to support the maintenance device and a cable having first and second ends attached to the carriage. Additionally, the system includes first and second anchor points, with the first anchor point being disposed adjacent to a component of the wind turbine. The second anchor point is spaced apart from the first anchor point such that the area of interest is generally disposed between the first and second anchor points. The cable may be coupled along its length between the first and second anchor points such that, as the cable is displaced, the carriage is moved to a position at which the area of interest is accessible to the maintenance device.

In another aspect, the present subject matter discloses a system for locating a maintenance device approximate an area of interest of a wind turbine. The system generally includes a carriage configured to support the maintenance device and includes a cable guide. A cable having first and second ends may be attached to the carriage. Additionally, the system includes first and second anchor points, with the first anchor point being disposed adjacent to a component of the wind turbine. The second anchor point is spaced apart from the first anchor point such that the area of interest is generally disposed between the first and second anchor points. The cable may be coupled along its length between the first and second anchor points such that, as the cable is displaced, the carriage is moved to a position at which the area of interest is accessible to the maintenance device. Further, the system may include a secondary cable coupled to the carriage through the cable guide and extending from generally adjacent the first anchor point to generally adjacent the second anchor point.

In a further aspect, the present subject matter discloses a method for locating a maintenance device approximate an area of interest of a wind turbine. The method may generally include establishing a first anchor point adjacent a component of the wind turbine, establishing a second anchor point spaced apart from the first anchor point such that the area of interest is generally disposed between the first and second anchor points, coupling a cable between the first and second anchor points, attaching the cable to a carriage configured to support the maintenance device and displacing the cable to move the carriage to a location between the first and second anchor points at which the area of interest is accessible to the maintenance device.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of an embodiment of a system for locating a maintenance device approximate an area of interest of a wind turbine in accordance with aspects of the present subject matter;
FIG. 2 illustrates a partial perspective view of the embodiment of the system illustrated in FIG. 1;
FIG. 3 illustrates a partial front view of another embodiment of a system for locating a maintenance device approximate an area of interest of a wind turbine in accordance with aspects of the present subject matter;
FIG. 4 illustrates a perspective view of an embodiment of a continuity testing device for performing a continuity test on a rotor blade in accordance with aspects of the present subject matter;
FIG. 5 illustrates a partial perspective view of an embodiment of a system for locating a continuity testing device approximate a rotor blade of a wind turbine so that a continuity test may be performed on the rotor blade in accordance with aspects of the present subject matter;
FIG. 6 illustrates a cross-sectional view of yet another embodiment of a system for locating a maintenance device approximate an area of interest of a wind turbine in accordance with aspects of the present subject matter; and,
FIG. 7 illustrates a side view of an embodiment of a carriage that may be used with a system for locating a maintenance device approximate an area of interest of a wind turbine in accordance with aspects of the present subject matter.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

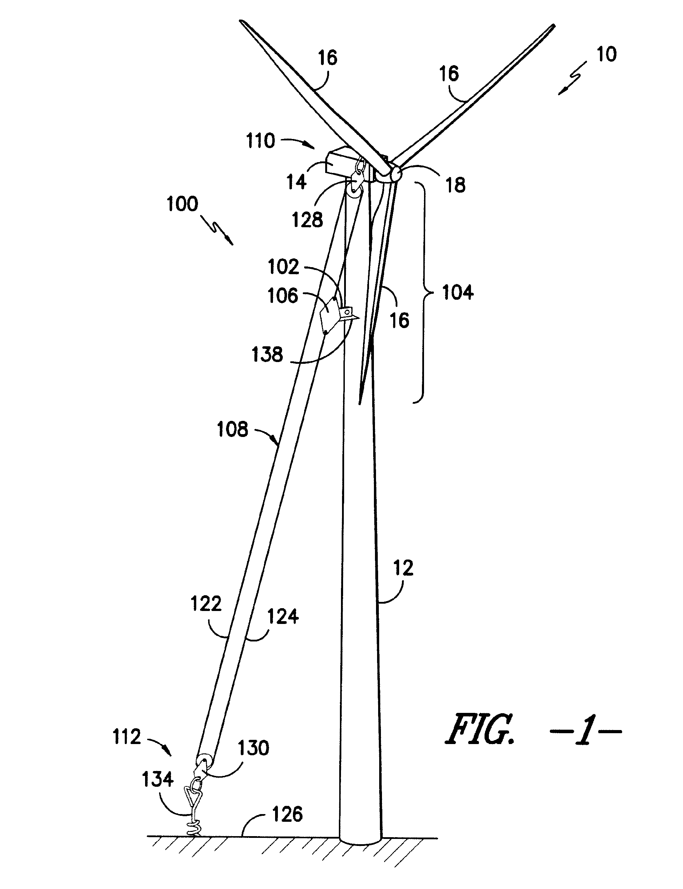

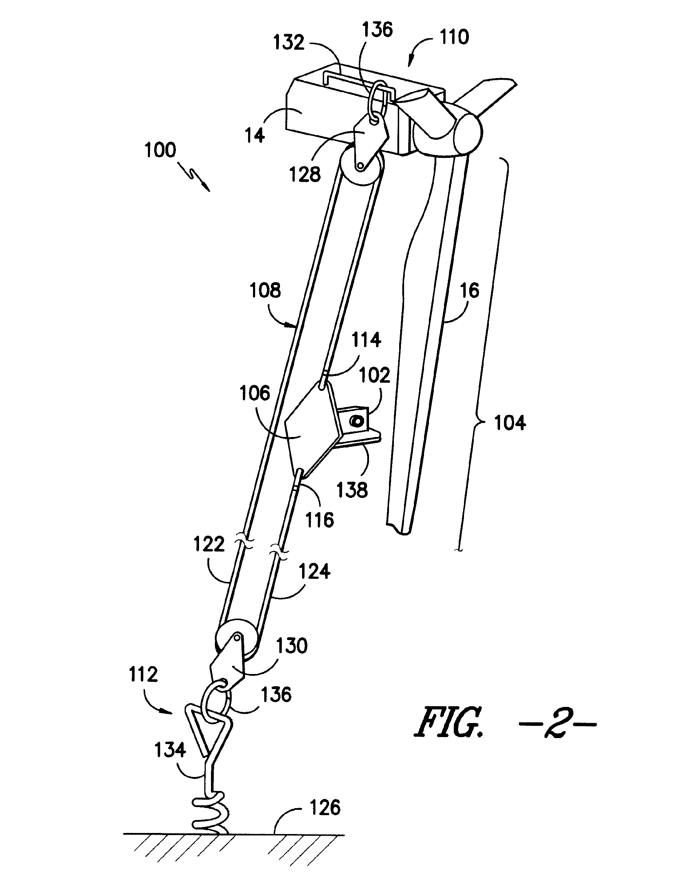

Referring to the drawings, FIGS. 1 and 2 illustrate one embodiment of a system 100 for locating a maintenance device 102 approximate an area of interest 104 of a wind turbine 10. In particular, FIG. 1 illustrates a perspective view of one embodiment of the disclosed system 100. FIG. 2 illustrates a partial perspective view of the embodiment of the system 100 depicted in FIG. 1.

The illustrated wind turbine generally includes a tower 12 with a nacelle 14 mounted thereon. A plurality of rotor blades 16 are mounted to a rotor hub 18, which is, in turn, connected to a main flange that turns a main rotor shaft. The wind turbine power generation and control components are housed within the nacelle 14. The wind turbine 10 of FIG. 1 is generally provided for illustrative purposes only to place the present invention in an exemplary field of use. Thus, it should be appreciated that the invention is not limited to any particular type of wind turbine configuration.

As shown in FIGS. 1 and 2, the disclosed system 100 generally includes a maintenance device 102 attached to a carriage 106. The maintenance device 102 may generally be configured to perform a maintenance operation on an area of interest 104 of the wind turbine 10. The system also includes a pulley cable 108 secured to the carriage 106. The pulley cable 108 may generally be coupled between a first anchor point 110 and a second anchor point 112, with the anchor points 110, 112 being spaced apart from one another such that the area of interest 104 is generally disposed between the first and second anchor points 110, 112. Thus, when the pulley cable 108 is displaced (such as by being pulled), the carriage 106 may be raised and/or lowered between the first and second anchor points 110, 112 to a position at which the area of interest 104 is accessible to the maintenance device 102. As such, the maintenance device 102 may then perform a desired maintenance operation on the area of interest 104.

As used herein, the term "maintenance operation" refers to any operation, action and/or test performed on a wind turbine 10 which is designed to monitor, measure, inspect, repair, detect or otherwise maintain the condition and/or status of a component of the wind turbine 10. For example, maintenance operations may include, but are not limited to, visual inspections of wind turbine components (e.g., the tower 12 and interior/exterior portions of the rotor blades 16), cleaning operations (e.g., blowing/cleaning off fouling from the rotor blades 16), painting operations (e.g., painting over rust spots), repair operations (e.g., sanding or patching components of the wind turbine 10), tests of the lightning conduction system of a wind turbine 10 (herein referred to as a continuity test), optical nondestructive evaluation (NDE) tests (e.g., shearography tests), thermography tests and other related operations/tests. Similarly, the term "maintenance device" may refer to any suitable equipment, tool and/or any other item utilized to perform a maintenance operation. Thus, for instance, maintenance devices 102 may include, but are not limited to, imaging equipment (e.g., visual cameras, infrared cameras, pan tilt zoom (PTZ) cameras) sensing equipment (e.g., infrared sensors and other suitable sensors), x-ray equipment, ultrasound equipment, water hoses, air hoses, cleaning equipment, painting equipment, microwave instrumentation, active infrared equipment, robotic arms, continuity testing equipment, optical NDE testing equipment, thermography testing equipment and any other suitable equipment, tools and/or items. Additionally, the term "area of interest" refers to any area on, in or surrounding a wind turbine component to which a maintenance operation is to be performed. For example, in several embodiments, the area of interest 104 may comprise all or a portion of the tower 12, rotor blades 16, hub 18, nacelle 14 and/or any other components of a wind turbine 10, including interior and exterior portions of such components.

As shown in FIGS. 1 and 2, in one embodiment, the area of interest 104 may generally correspond to a rotor blade 16 of the wind turbine 10. Accordingly, when a maintenance operation is to be performed on the rotor blade 16, it may generally be desirable for the corresponding maintenance device 102 to be positioned in a location at which the rotor blade 16 is accessible to the device 102 so that the particular maintenance operation may be performed effectively. However, the requisite location at which the rotor blade 16 is accessible to the maintenance device 102 may generally vary depending on the type of maintenance operation being performed and the type of maintenance device 102 being used. For example, if a visual inspection of the rotor blade 16 is being performed, the camera, optical device or other maintenance device 102 being used to capture images and/or video of the rotor blade 16 may only need to be located a certain distance from the blade 16 (e.g., 5 meters) to permit such images and/or video to be obtained. Alternatively, if a cleaning operation is to be performed on the rotor blade 16, the cleaning equipment being used may need to be positioned very close to the rotor blade 16 (e.g., less than 0.5 meter) in order to properly perform the operation. Thus, as will be described in greater detail herein, the system 100 of the present subject matter may generally be configured to position a maintenance device 102 at any suitable location relative to an area of interest 104 such that a desired maintenance operation may be performed.

Referring particularly to FIG. 2, in order to locate the maintenance device 102 approximate the area of interest 104, the pulley cable 108 of the disclosed system 100 may generally be configured such that, as the pulley cable 108 is pulled or otherwise displaced, the position of the carriage 106 between first and second anchor points 110, 112 may be vertically adjusted. Thus, the pulley cable 108 may generally include a first end 114 and a second end 116 attached to the carriage 106. For example, as shown in the illustrated embodiment, the first end 114 of the pulley cable 108 may be attached to an upper portion of the carriage 106 and the second end 116 of the pulley cable 108 may be attached to a lower portion of the carriage 106. However, it should be appreciated that the ends 114, 116 of the pulley cable 108 may generally be secured to the carriage 106 at any suitable location (including at the same location) and need not be attached to the carriage 106 at the particular locations illustrated in FIG. 2. Additionally, it should be appreciated that the ends 114, 116 of the pulley cable 108 may be attached to the carriage 106 using any suitable attachment mechanisms and/or methods. For example, in several embodiments, the ends 114, 116 of the pulley cable 108 may be attached by being tied, clipped, glued, taped, bonded, welded and/or mechanically fastened to the carriage 106.

The pulley cable 108 may also be configured to be coupled along its length between the first and second anchor points 110, 112 such that the cable 108 is permitted to move, slide or otherwise be displaced relative to the anchor points 110, 112. Thus, in the illustrated embodiment, when a first side 122 of the pulley cable 108 is pulled or otherwise displaced in a direction towards the second anchor point 112, the carriage 106 is raised relative to the wind turbine 10. Similarly, when a second side 124 of the pulley cable 108 is pulled or otherwise displaced in a direction towards the second anchor point 112, the carriage 106 is lowered relative to the wind turbine 10. Thus, by displacing the pulley cable 108, the vertical positioning of the carriage 106 may be adjusted such that the maintenance device 102 may be raised and/or lowered to a suitable height for performing a maintenance operation on the area of interest 104 of the wind turbine 10.

Referring still to FIGS. 1 and 2, the first and second anchor points 110, 112 may generally define the maximum and minimum vertical positions for the carriage 106, with the pulley cable 108 defining the path along which the carriage 106 and maintenance device 102 may be moved between the anchor points 110, 112. As such, it should be appreciated that the first and second anchor points 110, 112 may be vertically spaced apart from one another so that the area of interest 104 is generally disposed between the anchor points 110, 112. For example, as shown in FIGS. 1 and 2, the first anchor point 110 may generally be disposed on or adjacent to the nacelle 14 and the second anchor point 112 may generally be disposed on or adjacent to the surface 126 on which the wind turbine 10 is supported (e.g., the natural ground/earth and/or any man-made surface, such as a concrete pad). Thus, in one embodiment, the carriage 106 may be raised and/or lowered between the support surface 126 and the nacelle 14, thereby permitting the area of interest 104 (e.g., the rotor blade 16) to be made accessible to the maintenance device 102.

In alternative embodiments, it should be appreciated that the anchor points 110, 112 need not be defined at the locations illustrated in FIGS. 1 and 2. For example, the first anchor point 110 may generally be disposed at any suitable location on or adjacent to a component of a wind turbine 10. In particular, the first anchor point 110 may be disposed on or adjacent to the tower 12, hub 18, nacelle 14, rotor blade 16 or any other component attached to and/or disposed within the tower 12, hub 18, nacelle 14 or rotor blade 16 of the wind turbine 10. Similarly, the second anchor point 112 may generally be disposed at any location relative to the first anchor point 110 that permits the area of interest 104 to be accessible to the maintenance device 102 as the carriage 106 is moved between the anchor points 110, 112.

In general, it should be appreciated that any suitable structure, device and/or configuration may be utilized within the scope of the present subject matter to couple the pulley cable 108 at the first and second anchor points 110, 112 such that the cable 108 may move, slide or otherwise be displaced relative to the anchor points 110, 112. For example, in one embodiment, the pulley cable 108 may be coupled through one or more pulleys 128, 130 disposed at the first and second anchor points 110, 112, respectively. In particular, a first pulley 128 may be secured to the wind turbine 10 at the first anchor point 110 and may be configured to couple the pulley cable 108 to the wind turbine 10. Thus, in the embodiment of FIG. 2, the first pulley 128 may be attached to a portion of the nacelle 14, such as by being attached to a safety rail 132 disposed on the top of the nacelle 14. Additionally, a second pulley 130 may generally be positioned at or adjacent to the second anchor point 112. For example, as shown, the second pulley 130 may be attached to a pulley anchor 134 secured to the support surface 126 and/or disposed on or adjacent to the support surface 126.

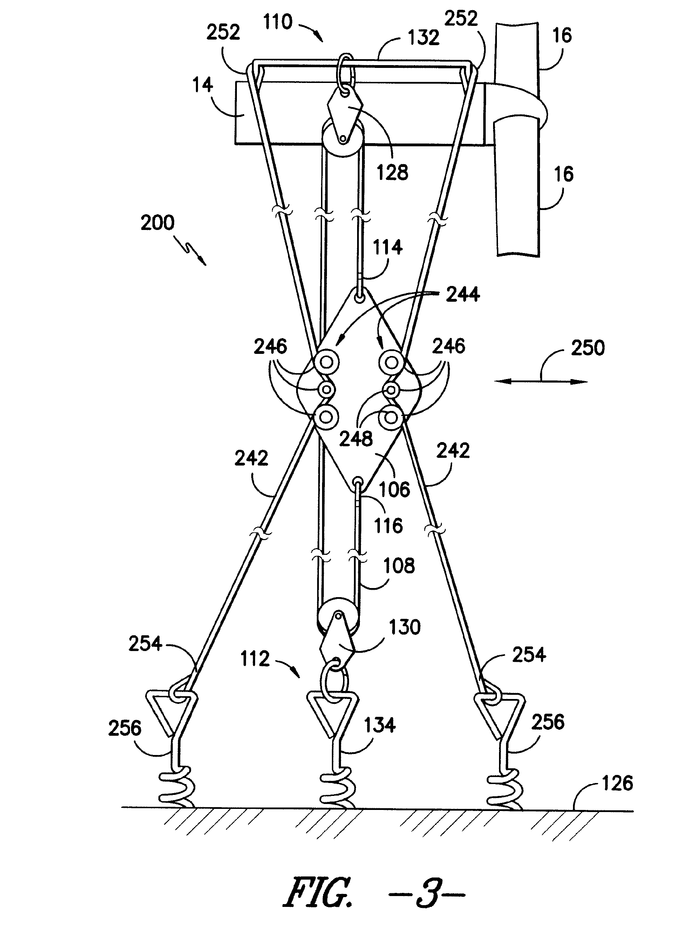

It should be appreciated that the first and second pulleys 128, 130 may generally be attached to the wind turbine 10 or pulley anchor 134 at the first and second anchor points 110, 112, respectively, using any suitable means known in the art. For instance, as shown in FIG. 3, the first pulley 128 may be attached to the nacelle 14 using an attachment ring or clip 136 (e.g., carabineer). Similarly, the second pulley 130 may be attached to the pulley anchor 134 using an attachment ring or clip 136. However, in alternative embodiments, the pulleys 128, 130 may be attached to the nacelle 14 or pulley anchor 134 using mechanical fasteners (e.g., screws, bolts, brackets and the like), cables, tape, adhesives or using any other suitable attachment mechanism and/or method.

In several embodiments, the pulley anchor 134 of the present subject matter may generally comprise any suitable anchor member which is configured to anchor or otherwise maintain a portion of the pulley cable 108 on or adjacent to the support surface 126. Thus, in the embodiment shown in FIGS. 1 and 2, the pulley anchor 134 may comprise a screw anchor configured to be screwed into or otherwise attached to the support surface 126. In other embodiments, the pulley anchor 134 may comprise any other suitable rope anchors, stakes, tie downs or the like which may be removably or non-removably attached to the support surface 126. Alternatively, the pulley anchor 134 may be configured to be simply disposed on or adjacent to the support surface 126 (i.e., not attached to the support surface 126). For example, the pulley anchor 134 may comprise a relatively heavy object (e.g., sandbags, liquid filled containers, weights, and/or any other suitable weighted objects), a vehicle (e.g., a work truck) or any other suitable item/object that may serve to anchor or otherwise maintain a portion of the pulley cable 108 on or adjacent to the support surface 126. Further, in another embodiment, a service/maintenance worker may serve as the pulley anchor 134 by coupling the pulley cable 108 and/or second pulley 130 to the worker or by having the worker simply hold the pulley cable 108 and/or pulley 130.

It should be appreciated that, in several embodiments, the position of the pulley anchor 134 may generally be adjusted to permit the vertical path of the carriage 106 between the first and second anchor points 110, 112 to be altered. As such, the maintenance device 102 may be appropriately positioned horizontally with respect to the area of interest 104 as the carriage 106 is raised and/or lowered. For example, the pulley anchor 134 may be configured to be moved closer and/or further away from the wind turbine tower 12 and/or to be moved around the circumference of the tower 12 to alter the position of the second anchor point 112 and, thus, adjust the travel path of the carriage 108 with respect to the wind turbine 10 and/or area of interest 104. Additionally, in embodiments in which a service/maintenance worker serves as the pulley anchor 134, the worker may simply walk along the support surface 126 to permit the area of interest 104 to be accessible to the maintenance device 102 as the carriage 106 is raised and/or lowered.

It should also be appreciated that, although the present subject matter is generally described as utilizing pulleys 128, 130 to allow the pulley cable 108 to move, slide or otherwise be displaced relative to the anchor points 110, 112, any suitable structure, device and/or configuration may generally be utilized to permit such relative displacement. For example, the pulley cable 108 may be coupled to the wind turbine 10 and/or the pulley anchor 134 by inserting the pulley cable 108 through a guide ring, guide hook, eyelet or any other suitable structure formed on or attached to the wind turbine 10 or pulley anchor 134 which permits the pulley cable 108 to be slidably and/or movably attached thereto. In another embodiment, the pulley cable 108 may be coupled to the wind turbine 10 and/or the pulley anchor 134 using a motorized device, a winch, a sprocket arrangement, or any other suitable device/mechanism that permits the pulley cable 108 to be displaced relative to the anchor points 110, 112. Various other suitable structures, devices and/or configurations for providing relative displacement between the pulley cable 108 and the anchor points 110, 112 should be apparent to those of ordinary skill in the art.

Referring still to FIGS. 1 and 2, as indicated above, the carriage 106 of the disclosed system may generally be configured to transport the maintenance device 102 between the first and second anchor points 110, 112. As such, it should be appreciated that the carriage 106 may generally have any suitable size, shape and/or dimensions that permits the pulley cable 108 and maintenance device 102 to be secured thereto. For example, as shown in FIG. 2, the carriage 106 may be configured as a relatively thin plate having a substantially diamond shape. However, in alternative embodiments, the carriage 106 may generally have any suitable thickness and/or shape. Additionally, the carriage 106 may generally be formed from any suitable material. However, in a particular embodiment of the present subject matter, the carriage 106 may be formed from a relatively lightweight material (e.g., aluminum, wood, polymers and/or any other suitable lightweight materials) so as to reduce the overall weight of the system.

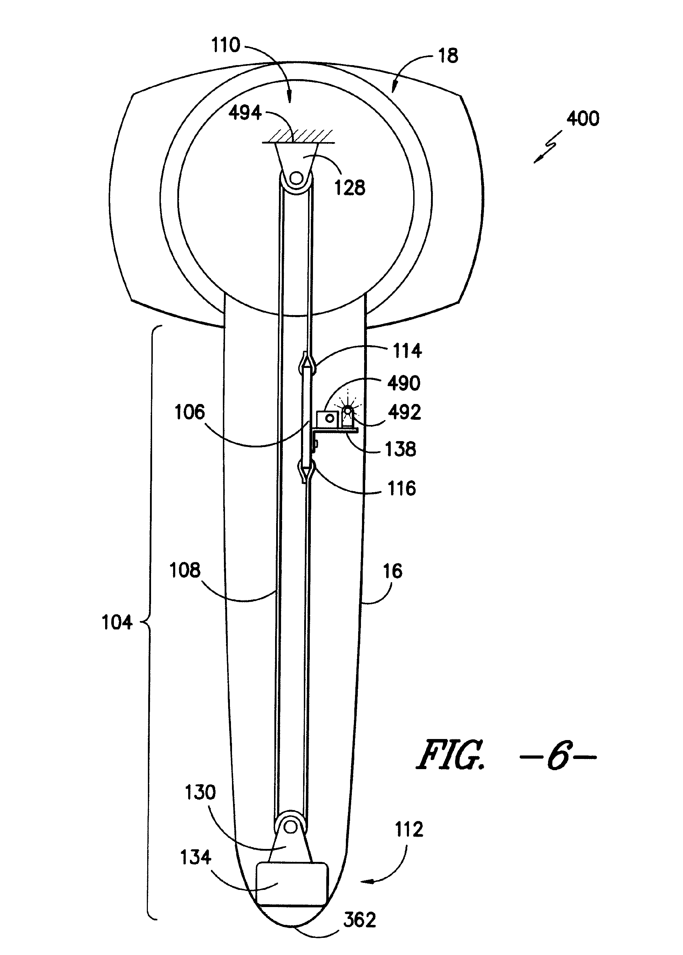

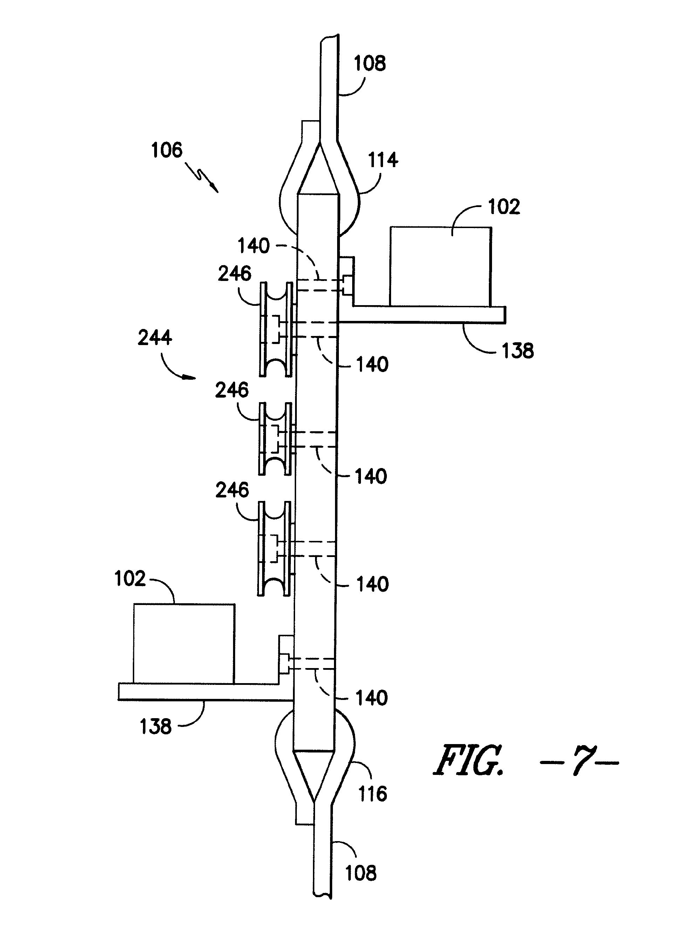

It should also be appreciated that the maintenance device 102 may generally be secured to the carriage 106 using any suitable means. For example, in one embodiment, the maintenance device 102 may be directly attached to a surface of the carriage 106 using any suitable attachment mechanism, such as bolts, screws, clips, tape, glue, brackets and the like, and/or using any suitable attachment method, such as bonding, welding and the like. Alternatively, one or more mounting devices may be provided for mounting the maintenance device 102 to the carriage 106. For instance, in the embodiments shown in FIG. 2 and 6, a single mounting platform 138 may be secured to a portion of the carriage 106 and may extend outwardly therefrom. One or more maintenance devices 102 may then be secured to and supported by the mounting platform 138 as the carriage 106 is raised and/or lowered between the first and second anchor points 110, 112. Additionally, in further embodiments, a plurality of mounting platforms 138 may be attached to the carriage. For example, FIG. 7 illustrates a side view of an embodiment of a carriage 106 including two mounting platforms 138 on which maintenance devices 102 may be mounted or otherwise secured. However, in other embodiments, three or more mounting platforms 138 may be attached to the carriage 106.

It should be appreciated that the mounting platforms 138 may generally be secured to the carriage 106 using any suitable means. For example, as shown in FIG. 7, suitable mechanical fasteners 140 (e.g., a screw, bolt or the like) may be utilized to attach the mounting platforms 138 to the carriage 106. Alternatively, any other attachment means, such as the attachment mechanisms and/or methods described above, may be utilized to attach the mounting platforms 138 to the carriage 106.

Referring now to FIG. 3, there is illustrated a side view of another embodiment of a system 200 for locating a maintenance device 102 (FIG. 2) approximate an area of interest 104 of a wind turbine 10. In general, the illustrated system 200 may include the same or similar components and may be configured similarly to the system 100 described above with reference to FIGS. 1 and 2. Thus, the system 200 may include a pulley cable 108 having first and second ends 114, 116 attached to a carriage 106. Additionally, the carriage 106 may generally be configured to transport a maintenance device 102 (FIG. 2) between first and second anchor points 110, 112. Further, the pulley cable 108 may generally be coupled along its length between the first and second anchor points 110, 112 (e.g., by using pulleys 128, 130 attached to the nacelle 14 and a pulley anchor 134, respectively) such that the pulley cable 108 is permitted to move, slide or otherwise be displaced relative to the anchor points 110, 112.

In addition, as shown in FIG. 3, the disclosed system 200 may also include one or more secondary cables 242 coupled to the carriage 106 and extending from an area generally adjacent the first anchor point 110 to an area generally adjacent the second anchor point 112. The secondary cables 242 of the present subject matter may generally be configured to permit the orientation and/or position of the maintenance device 102 (FIG. 2) to be controlled as the carriage 106 is raised and/or lowered by the pulley cable 108. For example, the secondary cables 242 may be utilized to stabilize and/or guide the carriage 106 as it being moved between the anchor points 110, 112, thereby preventing the carriage 108 from rotating during windy conditions. Additionally, in one embodiment, the secondary cables 242 may be coupled to the carriage 106 such that a frictional interface exists between the secondary cables 242 and the carriage 106. As such, the secondary cables 242 may be utilized to control the speed at which the carriage 106 is raised and/or lowered and may also be utilized to adjust the position of the carriage 106 relative to the wind turbine 10 and/or the area of interest 104. It should be appreciated that, although two secondary cables 242 are shown in FIG. 3, the disclosed system may generally include any number of secondary cables 242, including a single secondary cable 242 or three or more secondary cables 242.

In one embodiment, each secondary cable 242 may be coupled to the carriage 106 using a cable guide 244 attached to or defined by the carriage 106. The cable guides 244 of the present subject matter may generally have any configuration which permits the secondary cables 242 to serve as a means for guiding and/or controlling the carriage 106 as it is raised or lowered by the pulley cable 108. For example, in the embodiment illustrated in FIG. 3, each cable guide 244 may comprise a set of fixed friction studs 246 secured to the carriage 106. In general, the friction studs 246 may be arranged on the carriage 106 such that a secondary cable 242 must be snaked or otherwise wrapped around the studs 246 in order to couple the secondary cable 242 to the carriage 106. Such an arrangement may generally result in the secondary cables 242 providing a frictional or resistant force against the movement of the carriage 106 as it is raised and/or lowered, thereby permitting the secondary cables 242 to function as a control and/or guide means for the carriage 106. Thus, in one embodiment, the inner diameters 248 of the friction studs 246, about which secondary cables 242 are wrapped, may be varied to increase or decrease the friction provided between the studs 248 and the secondary cables 242 as the carriage 106 is raised and/or lowered. For example, as shown in FIG. 3, each cable guide 244 may include three friction studs 246, with the outer studs 246 having a larger inner diameter 248 than the middle stud. As such, the contact area between the middle stud 246 and the secondary cable 242 may be reduced, thereby reducing the amount of friction. Additionally, in another embodiment the friction studs 246 may be secured to the carriage 106 in an offset configuration to increase or decrease the friction created, such as by offsetting one or more of the studs 246 in a horizontal direction 250 relative to the other studs 246.

It should be appreciated that the friction studs 246 may generally comprise any structure about which the secondary cables 242 may be wrapped in order to couple the cables 242 to the carriage 106. For example, as shown in FIG. 7, the friction studs 246 may be configured as fixed pulleys secured to the carriage. Alternatively, the friction studs may comprise a bolt, stud, pin or any other structure which is configured to couple the secondary cables 242 to the carriage 106.

It should also be appreciated that, although each cable guide 244 is depicted as including three friction studs 246, the cable guides 244 may generally include any number of fiction studs 246, such as two friction studs 246 or four or more friction studs 246. Additionally, the friction studs 246 may be secured to the carriage 106 using any suitable means. For example, as shown in FIG. 7, the friction studs 246 may be attached to the carriage 106 using mechanical fasteners 140, such as screws, bolts or the like. However, in alternative embodiments, the friction studs 246 may be attached to the carriage 106 using any other suitable attachment mechanism, such as tape, cables, clips, adhesives, brackets and the like, or using any suitable attachment method, such as by welding, bonding and the like.

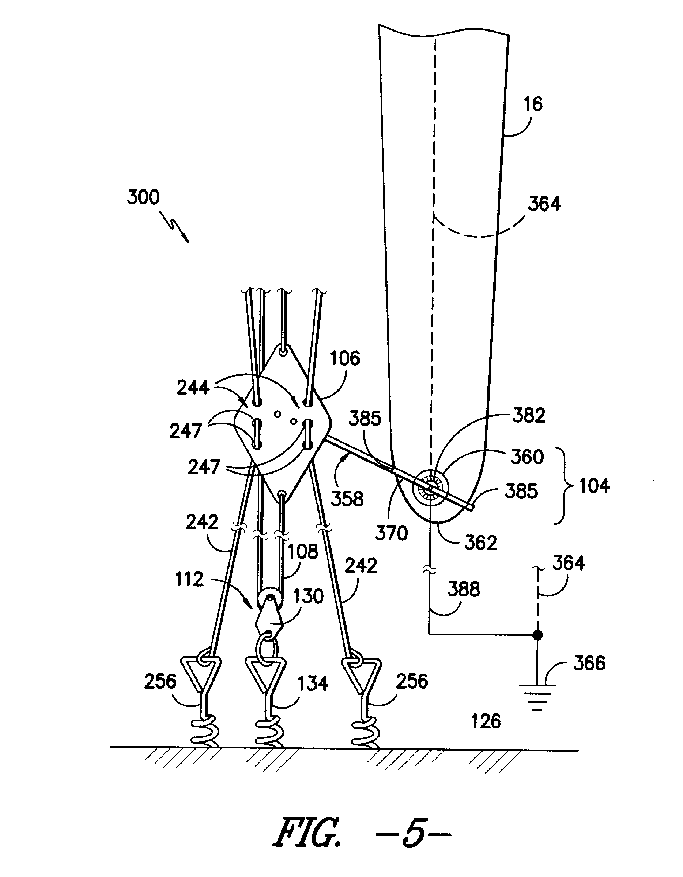

Further, in several embodiments of the present subject matter, the cable guides 244 need not comprise friction studs 246 but may generally comprise any structure that permits the secondary cables 242 to serve as a means for guiding and/or controlling the carriage 106 as it is raised and/or lowered by the pulley cable 108. For instance, in the embodiment illustrated in FIG. 5, each cable guide 244 may comprise two or more friction holes or rings 247 defined in the carriage 106. The secondary cables 242 may then be threaded through each friction ring 247 so as to couple the cables 242 to the carriage 106. As is generally known in the rope climbing art, such friction rings 247 are commonly utilized in climbing equipment (e.g., in rigging plates) to provide controlled friction between the equipment and the climbing rope. Additionally, in further embodiments of the present subject matter, each cable guide 244 may simply comprise a vertically extending channel defined within the carriage 106 through which a secondary cable 242 may be inserted.

Referring still to FIG. 3, each secondary cable 242 may be fixed at a top end 252 to a component of the wind turbine 10 (FIG. 1). For example, in one embodiment, the top ends 252 of the secondary cables 242 may be attached to the wind turbine 10 generally adjacent to the first anchor point 110. Thus, as shown, the top ends 252 of the secondary cables 242 may be secured to a portion of the nacelle 14, such as to the safety rail 132. However, in an alternative embodiment, the top ends 252 of the secondary cables 242 may be secured to a portion of the wind turbine 10 such that a distal relationship exists between the secondary cables 242 and the first anchor point 110.

The secondary cables 242 may also include a bottom end 254 disposed generally adjacent to the support surface 126 and/or the second anchor point 112. For example, in one embodiment, the bottom ends 254 of the secondary cables 242 may be disposed directly adjacent to the second anchor point 112, such as by being secured to a portion of the pulley anchor 134. Alternatively, as shown in FIG. 3, the bottom ends 254 of the secondary cables 242 may be attached to separate guide anchors 256 disposed generally adjacent the support surface 126 and/or the first anchor point 112.

It should be appreciated that the guide anchors 256 may generally be configured similarly to the pulley anchor 134 described above with reference to FIGS. 1 and 2. Thus, the guide anchors 256 may be configured to be removably or non-removably attached to the support surface 126 or may be configured to be disposed on or adjacent to the support surface 126 (i.e., not attached to the support surface 126). Alternatively, one or more service/maintenance workers may serve as the guide anchor(s) 256 and simply hold onto the secondary cables 242 as the carriage 106 is being raised and/or lowered. Additionally, similar to the pulley anchor 134, the position of the guide anchors 254 relative to the wind turbine 10 may be adjustable to facilitate guiding and/or controlling the orientation and/or position of the carriage 106 as it is raised and/or lowered.

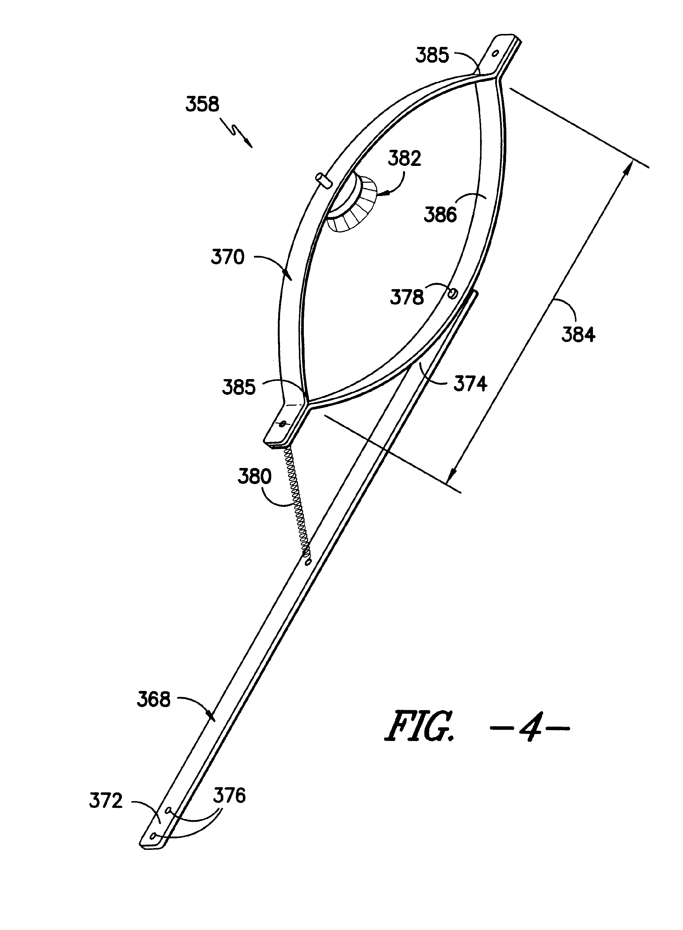

Referring now to FIGS. 4 and 5, there is illustrated embodiments of a continuity testing device 358 and a system 300 for locating the continuity testing device 358 approximate the area of interest 104 of the wind turbine 10. In particular, FIG. 4 illustrates a perspective view of an embodiment of the continuity testing device 358. Additionally, FIG. 5 illustrates a system 300 for locating the continuity testing device 258 onto a rotor blade 16 of a wind turbine 10 such that a continuity test may be performed.

As is generally known by those of ordinary skill in the art, wind turbines 10 are typically equipped with a lightning conduction system configured to protect the wind turbine 10 and its components from lightning strikes. The lightning conduction system typically includes one or more electrically conducting lightning receptors (e.g., a copper receptor) disposed at various locations along the length of each rotor blade 16. For example, as shown in FIG. 6, one lightning receptor 360 of the lightning conduction system may be disposed generally adjacent to the tip 362 of the rotor blade 16. Each lightning receptor 360 is generally coupled to an internal wire 364 (e.g., a copper wire) running from the receptor 360 through wind turbine 10 to the base of the tower 12 (FIG. 1), where it is connected to the ground 366. Thus, when lightning strikes the rotor blade 16, the electrical current flows from the lightning receptor 360 through the internal wire 364 and down to the ground 366, thereby preventing damage to the wind turbine 10. To ensure that the lightning conduction system is operating properly, a continuity test is generally performed. Thus, the continuity testing device 358 and related system 300, described below and illustrated in FIGS. 4 and 5, may generally be utilized to perform such test efficiently and effectively.

As shown in FIGS. 4 and 5, the continuity testing device 358 may include a support member 368 coupled to a tip ring 370. The support member 368 may generally comprise any structural member configured to be attached at a first end 372 to the carriage 106 of the disclosed system 300 and at a second end 374 to the tip ring 370. Thus, in the embodiment illustrated in FIG. 4, the support member 368 may define one or more mounting holes 376 configured to permit the support member 368 to be attached to the carriage 106 using any suitable mechanical fasteners, such as bolts, screws and the like. Alternatively, the support member 368 may be attached to the carriage 106 using any other suitable means, such as by using any suitable attachment mechanism (e.g., clips, tape, glue, adhesives, brackets and the like) and/or using any suitable attachment method (e.g., bonding, welding and the like).

Additionally, it should be appreciated that the second end 374 of the support member 368 may be attached to the tip ring 370 using any suitable means, such as by using the attachment mechanisms and/or methods described above. However, in a particular embodiment of the present subject matter, the second end 374 of the support member 368 may be configured to be attached to the tip ring 370 using any means that permits the tip ring 370 to pivot or otherwise move about the attachment point 378. For example, the tip ring 370 may be secured to the support member 368 using a ball and socket, by loosely attaching the tip ring 370 onto a pin or bolt extending through the support member 368 or using any other suitable pivotal attachment mechanism and/or method. Further, in embodiments in which the tip ring 370 is pivotally attached to the support member, a tensioning device may also be coupled between the tip ring 370 and the support member 368 to exert a resistance force against the tip ring 370, thereby providing a mechanism for controlling the position of the tip ring 370 relative to the support member 368. For example, as shown in FIG. 4, a spring 380 may be coupled between the tip ring 370 and support member 368 to enable the position of the tip ring 370 relative to the support member 368 to be controlled as the ring 370 pivots.

Referring still to FIGS. 4 and 5, the tip ring 370 of the continuity testing device 358 may generally be configured to slide or otherwise fit over a portion of a rotor blade 16 of a wind turbine 10. In particular, the tip ring 370 may be configured such that, when the ring 370 is positioned onto the rotor blade 16, an electrically conducting member 382 of the tip ring 370 makes electrical contact with the lightning receptor 360 of the lightning conduction system. As such, it should be appreciated that the shape, size and/or configuration of the tip ring 370, as well as the relative positioning of the electrically conducting member 382, may generally vary from wind turbine to wind turbine depending on numerous factors including, but not limited to, the shape, size and/or configuration of the rotor blade 16 and the position of the lightning receptors 360 on the rotor blades 16. In general, however, the tip ring 370 may be configured to have any suitable shape and/or width 384 that allows the tip ring 370 to be positioned around the blade tip 362 and moved onto the rotor blade 16 to a position at which the electrically conducting member 382 is capable of contacting a lightning receptor 360 of the lighting conduction system. For example, as shown in FIG. 4, the tip ring 370 may have a substantially elliptical shape so as to generally correspond to the shape of the blade tip 362. However, in alternative embodiments, the tip ring 370 may have any other suitable shape, such as circular, rectangular, triangular and the like. Additionally, in one embodiment, the width 384 of the tip ring 370 may be chosen such that the tip ring 370 can only be positioned onto the rotor blade 16 up to the location of the lightning receptor 360. Thus, as shown in FIG. 5, the outer edges 385 of the tip ring 370 may engage the rotor blade 16 as the ring 370 is raised into alignment with the lightning receptor 360.

It should be appreciated that the electrically conducting member 382 may generally comprise any suitable member formed from an electrically conducting material that is capable of making electrical contact with the lightning receptor 360 when the tip ring 370 is positioned onto the rotor blade 16. For example, in one embodiment, the electrically conducting member 382 may comprise a copper wire brush attached to an interior surface 386 of the tip ring 370 and extending inwardly therefrom. Additionally, the electrically conducting member 382 may generally be attached to the tip ring 370 using any suitable means, such as by using any suitable attachment mechanism (e.g., bolts, screws, clips, tape, glue, brackets and the like) and/or using any suitable attachment method (e.g., bonding, welding and the like). It should also be appreciated that, although a single electrically conducting member 382 is shown as being attached to the tip ring 370, any number of electrically conducting members 382 may be secured to the tip ring 370.

Referring particularly to FIG. 5, the system 300 for locating the continuity testing device 358 onto the rotor blade 16 and the method for performing the continuity test will generally be described. In general, the illustrated system 300 may include the same or similar components and may be configured similarly to the systems 100, 200 described above with reference to FIGS. 1-3. Thus, the system 300 may include a pulley cable 108 attached to a carriage 106 and coupled between a first anchor point 110 (FIGS. 2 and 3) and a second anchor point 112. The system may also include one or more secondary cables 242 coupled to the carriage 106 through cable guide(s) 244 (e.g., friction rings 247) to provide a means for controlling and/or guiding the carriage 106 is it is raised and/or lowered by the pulley cable 108. Additionally, as described above, the system 300 may further include a continuity testing device 358 attached to and supported by the carriage 106.

In one embodiment, to perform the continuity test, a wire 388 (e.g., a copper wire) is connected at one end to the electrically conducting member 382 of the continuity testing device 358 and at the other end to a component of the lightning conduction system, such as the internal wire 364 connected to the ground 366. The pulley cable 108 is then displaced to raise the carriage 106 vertically until the tip ring 370 is positioned over the rotor blade 16 such that the electrically conducting member 382 makes electrical contact with the lightning receptor 360. By contacting the lightning receptor 360 with the electrically conducting member 382, an electrical circuit is formed between the lightning conduction system and the wire 388 coupled to the electrically conducting member 382. The electrical properties of the circuit (e.g., the resistance) may then be checked using any suitable electrical testing equipment to ensure that the lightning conducting system is functioning properly.

It should be appreciated that, in positioning the tip ring 370 onto the rotor blade 16, the location of the pulley anchor 134, second pulley 130 and/or pulley cable 108 relative to the wind turbine 10 and/or the location of the guide anchors 256 and/or secondary cables 242 relative to the wind turbine 10 may be adjusted along the support surface 126 to ensure that the continuity testing device 358 is aligned vertically and properly oriented with respect to the blade tip 362 as the carriage 106 is raised.

Referring now to FIG. 6, there is illustrated a cross-sectional view of yet another embodiment of a system 400 for locating a maintenance device (e.g., camera 490 and light source 492) approximate an area of interest 104 of a wind turbine 10. In particular, FIG. 6 illustrates a system 400 for locating a maintenance device 102 approximate an area of interest 104 defined within the interior of a component of a wind turbine, such as within the interior of a rotor blade 16. For example, it may be desirable that a visual inspection of portions of the interior of a rotor blade 16 (e.g., the leading and trailing edge cavities) be preformed to check for cracking, bonding anomalies and other defects. As such, the disclosed system 400 may be configured to raise and/or lower a camera 490 or other suitable maintenance device within the rotor blade 16 such that images and/or video of the interior of the blade 16 may be captured. Thus, as shown in the embodiment of FIG. 6, a mounting platform 138 may be attached to the carriage 106 and may be configured to support a camera 490 and, in some embodiments, a light source 492 (e.g., an light emitting diode (LED) or any suitable flashlight) for illuminating the interior of the rotor blade 16. In alternative embodiments, the camera 490 and light source 492 may be mounted directly onto the carriage 106.

In general, the illustrated system 400 may include the same or similar components and may be configured similarly to the systems 100, 200, 300 described above with reference to FIGS. 1-3 and 5. Thus, system 400 may include one or more maintenance devices (e.g., camera 490 and light source 492) attached to a carriage 106 (shown in side view). The system 400 may also include a pulley cable 108 attached to the carriage 106 at first and second ends 114, 116. The pulley cable 108 may also be coupled between a first anchor point 110 and a second anchor point 112, with anchor points 110, 112 being spaced apart from one another such that an area of interest 104 (e.g., the interior of a rotor blade 16) is generally disposed between the first and second anchor points 110, 112. As such, when the pulley cable 108 is displaced, the carriage 106 may be moved to a position between the anchor points 110, 112 at which the area of interest 104 is accessible to the maintenance device(s).

However, unlike the embodiments described above, the first and second anchor points 110, 112 may generally be defined at locations within the interior of the wind turbine 10. For example, in embodiments in which the area of interest 104 comprises the interior of a rotor blade 16, the first anchor point 110 may generally be disposed within the hub 18 of the wind turbine 10. Thus, as shown in FIG. 6, the first anchor point 110 may be defined on or adjacent to an internal surface and/or component 494 of the hub 18, such as the inner hub shell/wall, the pitch control cabinet or any other suitable surface/component. As such, a first pulley 128 or other suitable structure may be secured to the interior surface/component 494 disposed at the first anchor point 110. Additionally, the second anchor point 112 may generally be disposed at any suitable location relative to the first anchor point 110 such that, as the carriage 106 is raised and/or lowered, the maintenance device 102 may be positioned appropriately to perform a desired maintenance operation on the area of interest 104. For instance, in the embodiment shown in FIG. 6, the second anchor point 112 may generally be disposed at or adjacent to the blade tip 362 of the rotor blade 16. Accordingly, a second pulley 130 or other suitable structure may be secured to a pulley anchor 134 disposed at the second anchor point 112. Thus, as the pulley cable 108 is pulled or otherwise displaced (e.g., by a service/maintenance worker located within the hub 18), the carriage 106 and maintenance device 102 may be raised and/or lowered between the hub 18 and the blade tip 362.

It should be appreciated that, in embodiments in which the system 400 of the present subject is generally disposed within the interior of a rotor blade 16, the pulley anchor 134 may generally comprise a relatively heavy object (e.g., sandbags, liquid filled containers, weights and other suitable weighted objects) or a similar item configured to be lowered into the rotor blade 16. Additionally, as shown in FIG. 6, the pulley anchor 134 may be configured to be lowered into the rotor blade 16 until the anchor is disposed generally adjacent to the blade tip 362 or otherwise cannot be lowered any further into the blade 16 due to size limitations. Alternatively, the pulley anchor 134 may be configured to be suspended at any suitable location along the length of the rotor blade 16.

Further, although not shown in FIG. 6, the illustrated system may also include one or more secondary cables 242 (FIGS. 3 and 5) configured to control and/or guide the carriage 106 as it is raised and/or lowered within the rotor blade 16. For example, similar to the embodiments illustrated in FIGS. 3 and 5, a cable guide(s) 244 (FIGS. 3 and 5) may be attached to or defined by the carriage 106 such that the secondary cable(s) 242 may be coupled to the carriage 106. In such an embodiment, the secondary cable(s) 242 may be configured to extend from generally adjacent the first anchor point 110 to generally adjacent to second anchor point 112. For example, the secondary cable(s) 242 may be attached to an interior surface/component 494 of the hub 18 at one end and may be attached to the pulley anchor 134 at the other end. Alternatively, instead of being attached to the pulley anchor 134, the secondary cable(s) 242 may be attached to a separate guide anchor(s) 254 which has been lowered into the rotor blade 16.

It should be appreciated by those ordinary skill in the art that the first anchor point 110 of the systems 100, 200, 300, 400 disclosed herein may generally be established by having a service/maintenance worker climb up the wind turbine 10 and attach or otherwise couple the pulley cable 108 to the wind turbine 10. For example, in the embodiment of FIGS. 1 and 2, the worker may climb onto the nacelle 14 of the wind turbine 10 and attach the first pulley 128 to a portion of the nacelle 14. Once a maintenance operation(s) has been performed on the wind turbine 10, however, it may be desirable to detach or otherwise remove the presently disclosed system 100, 200, 300, 400 from the wind turbine 10 so that it may be transported to another wind turbine. Thus, in one embodiment, the worker may climb back up the wind turbine 10 and detach or otherwise remove the pulley cable 108 and/or first pulley 128 from the wind turbine 10.

Alternatively, the disclosed system may be configured so as to remove the necessity for a second trip back up the wind turbine 10. For example, the pulley cable 108 and/or first pulley 128 may be held in place at the first anchor point 110 by a separate attachment cable (not shown) wrapped around or otherwise coupled to a component of the wind turbine 10 and extending down to the support surface 126. Thus, in the embodiment illustrated in FIGS. 1 and 2, the first pulley 128 may be attached to a separate attachment cable wrapped around the safety rail 132 of the nacelle 14 (or any another suitable component of the nacelle 14) and attached or otherwise disposed adjacent to the support surface 126. As such, when the maintenance operation being performed on the wind turbine 10 has been completed, the separate attachment cable may simply be detached from the support surface 126 and the entire system, including the separate attachment cable, may be pulled down to the support surface 126. In another embodiment, a motorized winch or similar device (not shown) may be secured to the wind turbine 10 at the first anchor point 110 and may be configured to automatically raise and lower an attachment cable (not shown) wrapped around its spindle. As such, when a maintenance operation is desired to be performed on the wind turbine 10, the winch may be configured to lower the attachment cable to the support surface 126. The pulley cable 108 and/or first pulley 128 may then be secured to the attachment cable and raised by the winch to the first anchor point 110. Once the maintenance operation has been completed, the winch may again unwind the attachment cable to permit the pulley cable 108 and/or first pulley128 to be detached from the attachment cable.

It should also be appreciated that, as used herein, the term "cable" refers to any length of material which may be configured to function as described herein. As such, the cables 108, 242 of the present subject matter may include any suitable cables, wires, ropes, chains or lines formed from any suitable material. For example, in one embodiment, the cables 108, 242 may comprise rope formed from twisted, braided or woven natural fibers (e.g., hemp and cotton) or synthetic fibers (e.g., polypropylene, nylon and polyesters). In other embodiments, the cables 108, 242 may comprise coated or non-coated, flexible or non-flexible metal cables and/or chains.

Further, in one embodiment, it should be appreciated that the maintenance devices 102 of the present subject matter may be configured to transfer data to a service/maintenance worker and/or may be configured to be operated by such worker wirelessly or through a wired connection as a maintenance operation is being performed. For example, when a visual inspection of the interior of the rotor blade 16 is being performed, it may be desirable for the camera, sensor or other suitable maintenance device 102 to transmit imagery data and other suitable information to the service/maintenance worker as the maintenance device 102 is being lowered or raised within the rotor blade 16. In such an embodiment, the service/maintenance worker may be provided with a display device (e.g., a laptop or any other suitable equipment having a display screen) that is communicatively coupled (e.g., through a wireless or wired connection) to the maintenance device 102 performing the visual inspection. As such, the service/maintenance worker may be able to view and record imagery data and other information as it being captured and may also be able to adjust the orientation and/or settings of the maintenance device 102 (e.g., adjust the location, tilt, zoom, pan or other properties of a camera) to enhance the data and/or information captured during the maintenance operation. It should also be appreciated that a position encoder or other similar device (e.g., a tape measure) may be coupled to the pulley cable 108 and/or carriage 106 such that the vertical position of the carriage 106 and/or maintenance device 102 relative to the wind turbine 10 may be determined.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A system for locating a maintenance device approximate an area of interest of a wind turbine, the system comprising:
   a carriage configured to support the maintenance device;
   a cable having a length defined between a first end and a second end, the first and second ends being attached to the carriage;
   a first anchor point disposed adjacent a component of the wind turbine;
   a second anchor point spaced apart from the first anchor point such that the area of interest is generally disposed between the first and second anchor points,
   wherein the cable is coupled along its length between the first and second anchor points such that, as the cable is displaced, the carriage is moved to a position at which the area of interest is accessible to the maintenance device.
2. The system of clause 1, wherein the area of interest comprises a portion of a rotor blade of the wind turbine.
3. The system of any preceding clause, wherein the first anchor point is disposed on a nacelle of a wind turbine and the second anchor point is disposed generally adjacent to a support surface of the wind turbine.
4. The system of any preceding clause, wherein the first anchor point is disposed within a hub of the wind turbine and the second anchor point is disposed within an interior of a rotor blade of the wind turbine.
5. The system of any preceding clause, wherein a first pulley is disposed at the first anchor point and a second pulley is disposed at the second anchor point, the cable being movably coupled between the first and second pulleys such that, as the cable is displaced, the carriage is moved to a position at which the area of interest is accessible to the maintenance device.
6. The system of any preceding clause, wherein the first pulley is attached to the wind turbine at the first anchor point.
7. The system of any preceding clause, wherein the second pulley is attached to a pulley anchor disposed at the second anchor point.
8. The system of any preceding clause, further comprising a secondary cable coupled to the carriage through a cable guide, the secondary cable extending from generally adjacent the first anchor point to generally adjacent the second anchor point.
9. The system of any preceding clause, wherein the cable guide is configured to provide a resistant force against the movement of the carriage.
10. The system of any preceding clause, wherein the maintenance device comprises at least one of a camera, x-ray equipment, ultrasound equipment, water hose, air hose, painting equipment, cleaning equipment, microwave instrumentation, active infrared equipment, robotic arm, continuity testing device, optical nondestructive evaluation testing equipment and thermography testing equipment.
11. The system of any preceding clause, wherein the maintenance device comprises a continuity testing device, the continuity testing device including a tip ring configured to be positioned over at least a portion of a rotor blade of the wind turbine such that an electrically conducting member of the tip ring contacts a lightning receptor of the rotor blade.
12. A method for locating a maintenance device approximate an area of interest of a wind turbine, the method comprising:
   establishing a first anchor point adjacent a component of the wind turbine;
   establishing a second anchor point spaced apart from the first anchor point such that the area of interest is generally disposed between the first and second anchor points;
   coupling a cable between the first and second anchor points;
   attaching the cable to a carriage configured to support the maintenance device;
      and
   displacing the cable to move the carriage to a location between the first and second anchor points at which the area of interest is accessible to the maintenance device.
13. The method of any preceding clause, wherein establishing a first anchor point adjacent a component of the wind turbine comprises attaching a first pulley to the component of the wind turbine disposed adjacent to the first anchor point.
14. The method of any preceding clause, wherein the component of the wind turbine comprises one of a nacelle of the wind turbine and a portion of a hub of the wind turbine.
15. The method of any preceding clause, wherein establishing a second anchor point spaced apart from the first anchor point comprises attaching a second pulley to a surface anchor disposed at the second anchor point.
16. The method of any preceding clause, wherein the second anchor point is disposed adjacent to a support surface of the wind turbine or is disposed within an interior of a rotor blade of the wind turbine.
17. The method of any preceding clause, further comprising coupling a secondary cable to the carriage, the secondary cable extending from generally adjacent the first anchor point to generally adjacent the second anchor point.
18. A system for locating a maintenance device approximate an area of interest of a wind turbine, the system comprising:
   a carriage configured to support the maintenance device and including a cable guide;
   a cable having a length defined between a first end and a second end, the first and second ends being attached to the carriage;
   a first anchor point disposed generally adjacent a component of the wind turbine;
   a second anchor point spaced apart from the first anchor point such that the area of interest is generally disposed between the first and second anchor points,
   a secondary cable coupled to the carriage through the cable guide, the secondary cable extending from generally adjacent the first anchor point to generally adjacent the second anchor point
   wherein the cable is coupled along its length between the first and second anchor points such that, as the cable is displaced, the carriage is moved to a position at which the area of interest is accessible to the maintenance device.
19. The system of any preceding clause, wherein a first pulley is attached to the wind turbine at the first anchor point and a second pulley is attached to a surface anchor at the second anchor point, the cable being movably coupled between the first and second pulleys such that, as the cable is displaced, the carriage is moved to a position at which the area of interest is accessible to the maintenance device.
20. The system of any preceding clause, wherein the cable guide is configured to provide a resistant force against the movement of the carriage.

## Claims

1. A system (100) for locating a maintenance device (102) approximate an area of interest (104) of a wind turbine (10), the system (100) comprising:
a carriage (106) configured to support the maintenance device (102);
a cable (108) having a length defined between a first end and a second end (114, 116), the first and second ends (114, 116) being attached to the carriage (106);
a first anchor point (110) disposed adjacent a component of the wind turbine (10);
a second anchor point (112) spaced apart from the first anchor point (110) such that the area of interest (104) is generally disposed between the first and second anchor points (110, 112),
wherein the cable (108) is coupled along its length between the first and second anchor points (110, 112) such that, as the cable (108) is displaced, the carriage (106) is moved to a position at which the area of interest (104) is accessible to the maintenance device (102).

2. The system (100) of claim 1, wherein the area of interest (104) comprises a portion of a rotor blade (16) of the wind turbine (10).

3. The system (100) of any preceding claim, wherein the first anchor point (110) is disposed on a nacelle (14) of a wind turbine (10) and the second anchor point (112) is disposed generally adjacent to a support surface (126) of the wind turbine (10).

4. The system (100) of any preceding claim, wherein the first anchor point (110) is disposed within a hub (18) of the wind turbine (10) and the second anchor point (112) is disposed within an interior of a rotor blade (16) of the wind turbine (10).

5. The system (100) of any preceding claim, wherein a first pulley (128) is disposed at the first anchor point (110) and a second pulley (130) is disposed at the second anchor point (112), the cable (108) being movably coupled between the first and second pulleys (128, 130) such that, as the cable (108) is displaced, the carriage (106) is moved to a position at which the area of interest (104) is accessible to the maintenance device (102).

6. The system (100) of claim 5, wherein the first pulley (128) is attached to the wind turbine (10) at the first anchor point (110).

7. The system (100) of claim 5 or claim 6, wherein the second pulley (130) is attached to a pulley anchor (134) disposed at the second anchor point (112).

8. The system (100) of any preceding claim, further comprising a secondary cable (242) coupled to the carriage (106) through a cable guide (244), the secondary cable (242) extending from generally adjacent the first anchor point (110) to generally adjacent the second anchor point (112).

9. The system (100) of claim 8, wherein the cable guide (244) is configured to provide a resistant force against the movement of the carriage (106).

10. The system (100) of any preceding claim, wherein the maintenance device (102) comprises at least one of a camera, x-ray equipment, ultrasound equipment, water hose, air hose, painting equipment, cleaning equipment, microwave instrumentation, active infrared equipment, robotic arm, continuity testing device (358), optical nondestructive evaluation testing equipment and thermography testing equipment.

11. The system (100) of any preceding claim, wherein the maintenance device (102) comprises a continuity testing device (358), the continuity testing device (358) including a tip ring (370) configured to be positioned over at least a portion of a rotor blade (16) of the wind turbine (10) such that an electrically conducting member (382) of the tip ring (370) contacts a lightning receptor (360) of the rotor blade (16).

12. A method for locating a maintenance device (102) approximate an area of interest (104) of a wind turbine (10), the method comprising:
establishing a first anchor point (110) adjacent a component of the wind turbine (10);
establishing a second anchor point (112) spaced apart from the first anchor point (110) such that the area of interest (104) is generally disposed between the first and second anchor points (110, 112);
coupling a cable (108) between the first and second anchor points (110, 112);
attaching the cable (108) to a carriage (106) configured to support the maintenance device (102); and
displacing the cable (108) to move the carriage (106) to a location between the first and second anchor points (110, 112) at which the area of interest (104) is accessible to the maintenance device (102).

13. The method of claim 12, wherein establishing a first anchor point (110) adjacent a component of the wind turbine (10) comprises attaching a first pulley (128) to the component of the wind turbine (10) disposed adjacent to the first anchor point (110).

14. The method of claim 13, wherein the component of the wind turbine (10) comprises one of a nacelle (14) of the wind turbine (10) and a portion of a hub (18) of the wind turbine (10).

15. The method of any of claims 12 to 14, wherein establishing a second anchor point (112) spaced apart from the first anchor point (110) comprises attaching a second pulley (130) to a surface anchor (134) disposed at the second anchor point (112).
